# EUROPEAN PATENT APPLICATION

(11) **EP 1 773 074 A1**
(43) Date of publication of application: **11.04.2007**
(21) Application number: 05292095.6
(22) Date of filing: 07.10.2005
(51) Int. Cl.: H04Q 7/22

(54) **A method of operating a messaging service of a mobile telecommunication system**

(71) Applicant: Alcatel Lucent, 75008 Paris (FR)
(72) Inventor: Rupp, Stephan, Dr, 74354 Besigheim (DE); Aladros Lopez, Rodolfo, Dipl.-Phys., 70329 Stuttgart (DE); Köstering, Nina, Dipl.-Ing., 70499 Stuttgart (DE)
(74) Representative: Schäfer, Wolfgang

(57) **Abstract**

A method of operating a mobile telecommunication system is described. Information relating to a current location of a first user is transmitted to a second user. A location of the first user is associated to a corresponding location identity which is automatically identifiable. The location identity is automatically identified and used as the current location of the first user if the first user has moved to the corresponding location.

## Description

The invention relates to a method of operating a messaging service of a mobile telecommunication system wherein information relating to a current location of a first user is transmitted to a second user.

An instant messaging service or a presence service allows a subscriber to receive information about the current location of his/her friend/s or college/s. However, for that purpose it is necessary that this friend or college always manually inputs and forwards information about his/her current location to the service, e.g. whether he/she is at home or in the office or the like. Apparently, this manual input requirement is cumbersome.

It is therefore an object of the invention to provide a method as described above that requires less manual input by the user.

The invention solves this object by a method according to claim 1. The object is also solved by a software product or a user equipment, in particular a mobile unit, or a messaging server or a telecommunication system according to one of claims 8 to 11.

In a configuration procedure of the invention, a location of the first user is associated to a corresponding location identity. This location identity is automatically identifiable. Then, during operation of the invention, the location identity is automatically identified and used as the current location of the first user if the first user has moved to the corresponding location.

The invention only requires the configuration of the location identity for each relevant location of the user. Then, the invention automatically evaluates the current location by automatically identifying the current location identity. As a result, after having configured the system, it is not necessary anymore for the user to input his/her new location after he/she has moved. Instead, the invention automatically discovers the new location of the user based on the automatic identification of the location identity.

In an advantageous embodiment of the invention, an identification of a cell of the mobile telecommunication system is used as the location identity. Alternatively, a Bluetooth device address of a Bluetooth access point or a MAC address of a WLAN access point may be used as the location identity. Any one of these possibilities allows the automatic identification of the location identity.

In an embodiment of the invention, the location identity may then be transmitted within the telecommunication system. In particular, the location identity may be forwarded to the second user as the current location of the first user. Based on the received location identity, the second user knows where the first user is presently located so that the second user can decide whether to send a message to the first user or to call him/her or the like.

In an advantageous embodiment of the invention, the location identity is associated to a specific location of the first user by automatically identifying the corresponding location identity and by assigning a pseudonym to the specific location. The pseudonym allows an easy use of the messaging service, as it is not necessary for the user to understand the automatically identified location identities. Instead, the user only has to work with the selected pseudonyms.

In another advantageous embodiment of the invention, the pseudonym of the current location of the first user is transmitted within the telecommunication system. This feature avoids that the location identity as such is transmitted within the telecommunication system. Instead, only the pseudonym is transmitted e.g. to the second user. Compared to the location identity, the pseudonym does not comprise any geographical information. Therefore, the second user must have additional knowledge of the first user in order to correctly assign the received pseudonyms to the corresponding locations of the first user. However, if a third party receives the pseudonyms for whatever reasons, it is not possible for this person to actually deduce any kind of geographical information from these pseudonyms.

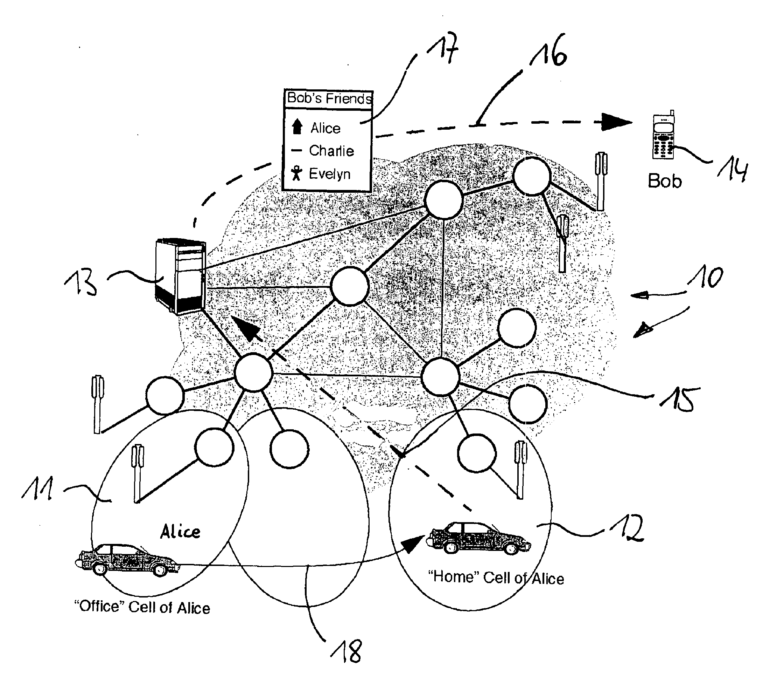

Further features, applications and advantages of the invention will become apparent from the following description of exemplary embodiments of the invention that are shown in the drawing. There, all described and shown features separately or in any combination represent the subject matter of the invention, independently of the wording in the description or the representation in the drawing and independently of the combination in the claims or the dependencies of the claims.

The only figure of the drawing shows a schematic diagram of an embodiment of a telecommunication service according to the invention.

In the figure, a geographical area 10 is shown that is covered by a number of cells of a mobile telecommunication system. Any one of the cells is schematically shown as a circle and two of the cells are explicitly depicted with the reference numerals 11 and 12.

Furthermore, a messaging server 13 and a mobile unit 14 are provided. The messaging server 13 is adapted to receive information from any one of the cells and to send information to the mobile unit 14. The mobile unit 14 is adapted to receive the information from the messaging server 13 and to display the information to a user. The mobile unit 14 may be realized by a mobile phone or a mobile personal digital assistant or the like.

It is assumed that a first person called Alice is located within the cell 11 and that Alice possesses a mobile unit that is adapted to communicate with the messaging server 13. Furthermore, it is assumed that the messaging server 13 and Alice's mobile unit comprise respective software that is adapted to provide a telecommunication service as follows. It is added that Alice's mobile unit may also have all functionalities as described in connection with the mobile unit 14. However, it is also possible that this is not the case.

As a precondition, a configuration of Alice's mobile unit has to be carried out. For example, if Alice is currently in her office, then she configures her current location as her "Office". This definition results in an association of the identification of the cell 11 where Alice is located currently, with the location pseudonym "Office". For that purpose, the current cell identification is visible to Alice's mobile unit. The mentioned association is stored in Alice's mobile unit. As a result and as it is shown in the figure, the current cell 11 is the "Office" cell of Alice.

As also shown in the figure, Alice's home is located within the cell 12. Therefore, if Alice is at home she may configure her mobile unit again by defining her current location as her "Home". This definition results in an association of the identification of the cell 12 where Alice is located currently, with the location pseudonym "Home". This association is stored in Alice's mobile unit again. As a result and as it is shown in the figure, the current cell 12 is the "Home" cell of Alice.

This configuration procedure may be carried out for a number of different locations where Alice often stays, e.g. a pub, a tennis court, a shopping mall and the like. The associations between these location pseudonyms and the corresponding cell identifications are all stored in Alice's mobile unit.

After being configured, Alice's mobile unit checks whether an association is stored in the mobile unit for Alice's current location, i.e. for the identification of that cell where Alice currently is present. This check may be carried out from time to time or may be triggered by a change of the current cell identification. For that purpose, Alice's mobile unit evaluates the identification of the current cell and checks whether a location pseudonym is stored for that cell identification.

If this is the case, then Alice's mobile unit forwards the associated pseudonym for the current cell identification to the messaging server 13. For example, the term "Home" or any kind of abbreviation may be sent to the messaging server 13. This notification function is shown in the figure by an arrow 15. Again, this notification function of the associated pseudonym may be carried out from time to time or may be triggered by a change of the current cell identification.

The received pseudonym is then stored in the messaging server 13 within a database. Only the present pseudonym, i.e. the present location of Alice is stored in the messaging server 13. As will be described below, the messaging server 13 may forward this information to other users.

It is now assumed that Alice participates in a so-called instant messaging service and has allowed specific users to see where she is presently located. Furthermore, it is assumed that the mobile unit 14 belongs to a person called Bob and that Bob has subscribed to the messaging service of Alice.

Then, the messaging server 13 forwards the presently associated pseudonym of Alice to Bob's mobile unit 14. This update function is shown in the figure by an arrow 16. For example, the messaging server 13 forwards the associated pseudonym to Bob which has the meaning that Alice is in her office. As already mentioned, this information may be forwarded to Bob's mobile unit 14 by sending the term "Office" or any kind of abbreviation. The update function may be carried out from time to time or may be triggered by a change of the current association as stored in the messaging server 13.

The pseudonym is received by Bob's mobile unit 14 and is then displayed on Bob's mobile unit 14. For example, Bob's mobile unit 14 may display a window as it is shown in the figure and as it is abbreviated there with the reference numeral 17. In this window, Bob's friends are listed with their names and corresponding icons. As Alice is presently located in her office, the window would have to show an icon with the meaning that Alice is in her office.

If Alice moves from her office to her home as it is schematically shown in the figure by the car and the arrow 18, then Alice's mobile unit forwards the new associated pseudonym, i.e. "Home", to the messaging server 13 for example when she has moved into the cell 12. This new associated pseudonym is forwarded to Bob's mobile unit 14 which then replaces the current icon and shows another icon in its window 17. This new icon would then have the meaning that Alice is at home. This is schematically shown in the window 17 of the figure. There, the icon being associated with Alice represents a little house which means that Alice is at home.

In general, if Alice moves into another cell, and if Alice's mobile unit has stored an associated pseudonym for this other cell, then this pseudonym is forwarded to the messaging server 13 and from there to Bob's mobile unit 14. There, Alice's present location is shown by an icon that represents the associated pseudonym.

In connection with the above-described telecommunication service, no specific location of Alice is transmitted. In particular, no geographical data and even no cell identifications are transmitted. Instead, only pseudonyms like "Office" or "Home" are transmitted. These pseudonyms require additional knowledge to conclude to the corresponding geographical location.

A subscriber like Bob, who knows Alice personally, probably knows where Alice's office or Alice's home actually is located. Consequently, a subscriber is probably able to conclude from the transmitted pseudonyms where Alice presently is located. However, a third party that receives the associated pseudonyms for whatever reasons, is not able to actually locate Alice's office or Alice's home as this person does not have the required knowledge to understand the received pseudonyms.

In an alternative embodiment, it is also possible that Alice's mobile unit forwards the current cell identification to the messaging server 13 and that the messaging server 13 stores the mentioned associations. In this case, the entire knowledge of the telecommunication service is centrally stored within the messaging server 13.

In another alternative embodiment, it is also possible to use other location identities instead of the cell identifications of a telecommunication system. For example, so-called Bluetooth device addresses of Bluetooth access points or so-called MAC addresses of WLAN access points may be used. All these location identities may be automatically identified. Therefore, all these location identities may be used in connection with the above-described procedures.

## Claims

1. A method of operating a messaging service of a mobile telecommunication system wherein information relating to a current location of a first user is transmitted to a second user, **characterized in that** a location of the first user is associated to a corresponding location identity which is automatically identifiable, and that the location identity is automatically identified and used as the current location of the first user if the first user has moved to the corresponding location.

2. The method of claim 1 wherein an identification of a cell of the mobile telecommunication system is used as the location identity.

3. The method of claim 1 wherein the location identity is associated to a specific location of the first user by automatically identifying the corresponding location identity and by assigning a pseudonym to the specific location.

4. The method of claim 3 wherein the pseudonym is assigned to the specific location by the first user.

5. The method of claim 1 wherein the location identity is transmitted within the telecommunication system.

6. The method of claim 3 wherein the association between the pseudonym and the location identity of the specific location, is stored at a first user's equipment.

7. The method of claim 3 wherein the pseudonym of the current location of the first user is transmitted within the telecommunication system.

8. The method of claim 7 wherein the pseudonym is forwarded to the second user to be displayed there as the first user's current location.

9. The method of claim 8 wherein the association of the current location to the pseudonym is forwarded to a messaging server, and wherein the messaging server is adapted to forward the association to the second user.

10. A software product comprising software modules that are programmed to carry out the method according to one of claims 1 to 9.

11. A user equipment, in particular a mobile unit, comprising a software module according to claim 10.

12. A messaging server comprising a software module according to claim 10.

13. A telecommunication system comprising a user equipment according to claim 11 and a messaging server according to claim 12.
